# EUROPÄISCHE PATENTANMELDUNG

(11) **EP 3 945 716 A1**
(43) Veröffentlichungstag der Anmeldung: **02.02.2022**
(21) Anmeldenummer: 21188414.3
(22) Anmeldetag: 29.07.2021
(51) Int. Cl.: H04N 5/225, H04N 5/232

(54) **PANORAMAKAMERA**

(30) Priorität: 30.07.2020 DE 102020120200
(71) Anmelder: Sporttotal Technology GmbH, 50829 Köln (DE)
(72) Erfinder: SCHLEICHER, Marco, 83043 Bad Aibling (DE); DÜRR, Tobias, 53501 Grafschaft (DE); LANGE, Frederik, 90408 Nürnberg (DE); SINGH, Maximilian, 90411 Nürnberg (DE)
(74) Vertreter: Richly & Ritschel Patentanwälte PartG mbB

(57) **Zusammenfassung**

Panoramakamera zum Erfassen von Sportveranstaltungen umfassend ein Gehäuse, wobei das Gehäuse ein erstes Teilgehäuse umfasst, das erste Teilgehäuse umfassend:
a. ein Kamerasystem mit einem Bildwinkel von mindestens 180° zur Erfassung eines Sichtfeldes, das Kamerasystem umfassend mindestens eine Kamera, wobei die mindestens eine Kamera eingerichtet ist, einen ersten Videodatenstrom basierend auf dem Sichtfeld des Kamerasystems zu erfassen,
b. ein Computersystem eingerichtet zum automatischen Bestimmen eines Teilbereichs des Videodatenstroms, in dem eine interessierende Handlung der Sportveranstaltung vorgenommen wird, und Erstellen eines zweiten Videodatenstroms, bei dem jeder Frame des zweiten Videodatenstroms nur den Teilbereich des ersten Panoramavideodatenstroms enthält.

## Beschreibung

### Gebiet der Erfindung

Die Erfindung betrifft eine Panoramakamera zum Erfassen von Veranstaltungen, insbesondere Sportveranstaltungen.

### Hintergrund

Digitale Panoramakameras zum Erfassen von Veranstaltungen oder Szenen einer Veranstaltung, insbesondere Szenen von Sportveranstaltungen, sind aus dem Stand der Technik bekannt. Diese werden oft an Masten oder ähnlichen Vorrichtungen in großer Höhe montiert. Diese Panoramakameras aus dem Stand der Technik haben jedoch oft den Nachteil, dass die eigentliche Optik und die auswertenden Computersysteme in getrennten Vorrichtungen untergebracht sind, was deren Anfälligkeit gegenüber Schäden jeder Art erhöht. Ferner ist die Montage solcher verteilten Systeme aufwendig und diese Systeme sind witterungsanfällig, insbesondere gegenüber Feuchtigkeit.

Aufgabe der nachfolgend beschriebenen Erfindung ist es daher, eine Panoramakamera bereitzustellen, die die benannten Nachteile nicht aufweist.

### Eingehende Beschreibung

Die Erfindung betrifft eine Panoramakamera zum Erfassen von Sportveranstaltungen umfassend ein Gehäuse, wobei das Gehäuse ein erstes Teilgehäuse umfasst, das erste Teilgehäuse umfassend:
ein Kamerasystem mit einem Bildwinkel von mindestens 180° zur Erfassung eines Sichtfeldes, das Kamerasystem umfassend mindestens eine Kamera, wobei die mindestens eine Kamera eingerichtet ist, einen ersten Videodatenstrom basierend auf dem Sichtfeld des Kamerasystems zu erfassen, und
ein Computersystem zur Verarbeitung der Bilder der mindestens einen Kamera.

Die Panoramakamera kann zusätzlich zu den Kameras ein Computersystem mit einem Prozessor und einem Speicher umfassen. Verschiedene Arten von Prozessoren und Speicher sind als solche bekannt und können alternativ oder gemeinsam verwendet werden. Außerdem kann das Computersystem Bilder der mindestens einen Kamera empfangen, beispielsweise über einen internen Datenbus, und diese verarbeiten. Die Datenverarbeitungseinheit umfasst zusätzlich eine externe Übertragungsschnittstelle, beispielsweise um darüber Teilbereiche des aufgenommenen Videodatenstroms, insbesondere als Videobild, einer virtuellen Kamera bereitzustellen. Dazu kann die Datenverarbeitungseinheit basierend auf den Bildern der individuellen Kameras und unter Verwendung der Panoramakarte einen zweiten Videostream als "Bild" der virtuellen Kamera erzeugen.

Insbesondere ist das Computersystem eingerichtet zum Erzeugen eines Panoramavideodatenstroms aus dem ersten Videodatenstrom oder zum automatischen Bestimmen eines Teilbereichs des ersten Videodatenstroms, in dem eine interessierende Handlung der Sportveranstaltung vorgenommen wird, und Erstellen eines zweiten Videodatenstroms, bei dem jeder Frame des zweiten Videodatenstroms nur den Teilbereich des ersten Videodatenstroms enthält.

Diese Panoramakamera hat den Vorteil, dass das Computersystem bereits in das Gehäuse integriert ist, und daher weniger Störungen bei der Übertragung des Videodatensignals auf das Computersystem erfolgen, sowie die Montage vereinfacht wird, da nicht mehrere getrennte Komponenten installiert werden müssen.

Das Kamerasystem kann mindestens zwei Kameras umfassen, wobei die mindestens zwei Kameras eingerichtet sind, horizontal nebeneinanderliegende erste und zweite Teilbereiche des Sichtfeldes zu erfassen.

Bei Verwendung nur einer Kamera zur Erfassung eines Panoramabildes kann das aufgenommene Bild oft sehr stark verzerrt (Fischaugeneffekt) sein, was die nachfolgende Verarbeitung der aufgenommenen Bilder erschweren kann. Bei Verwendung von zwei Kameras mit horizontal nebeneinanderliegenden Sichtfeldern wird dieser Effekt reduziert. Nebeneinanderliegende Sichtfelder sind solche Sichtfelder, die direkt aneinandergrenzen, oder vorzugsweise Sichtfelder, die überlappen. Mittels einer Technik, die Stitching genannt wird, können diese Einzelbilder der Kameras zu einem zusammenhängenden Panoramabild vereinigt werden.

Der Bildwinkel jeder der zwei Kameras kann zwischen 80° und 150°, 85° und 135°, oder 90° und 120° sein.

Die Kameras sind vorzugsweise derart angeordnet, dass sie an einem Punkt gemeinsam angeordnet sind, wobei sich aufgrund einer räumlichen Ausdehnung der Kameras geringfügige Positionsunterschiede ergeben können, die üblicherweise im Bereich von weniger als einem Meter, weniger als einem halben Meter, im Bereich von weniger als 25 Zentimetern, weniger als 15 Zentimetern, weniger als 10 Zentimetern oder 5 Zentimetern liegen. Im Vergleich zu einem Abstand zu der Szene (der Veranstaltung) sind diese Positionsunterschiede typischerweise gering und fallen daher nicht ins Gewicht. Um die Szene mit den Kameras erfassen zu können, sind die Sichtfelder der Kameras unterschiedlich ausgerichtet zur Erfassung der Szene.

Das Kamerasystem kann mindestens eine dritte Kamera umfassen, wobei die dritte Kamera eingerichtet ist, einen dritten Teilbereich des Sichtfeldes zu erfassen, der gegenüber den horizontal nebeneinanderliegenden Teilbereichen des Sichtfeldes vertikal versetzt ist und auf einer horizontalen Achse, die den ersten und zweiten Teilbereich verbindet, zwischen dem ersten und zweiten Teilbereich angeordnet ist.

Durch die Verwendung dreier Kameras ist es möglich, den Verzerrungseffekt weiter zu minimieren. Ferner ist es möglich, durch die vertikale Versetzung des Sichtfeldes die dritte Kamera gegenüber den anderen Kameras auch im ersten Teilgehäuse vertikal versetzt anzuordnen, was eine kompaktere Gestaltung des ersten Teilgehäuses ermöglicht.

Die Kameras können identisch ausgeführt sein, wodurch sich eine einfache Verwendung und Herstellung des Kamerasystems ergibt. Prinzipiell können aber beliebige Kameras verwendet werden. Das Kamerasystem kann also prinzipiell mit beliebigen Kameras gebildet sein. Die Kameras können beispielsweise unterschiedlich große Sichtfelder aufweisen, d.h. unterschiedliche Bildwinkel in horizontaler wie auch in vertikaler Richtung, wie auch unterschiedliche Bildauflösungen.

Die Bildauflösung der Kameras kann mindestens 1280x720 Pixel, 3840 x 2160 Pixel, oder 7680 x 4320 sein. Die Kameras können mit einer Bildfrequenz von 24 bis 30 FPS oder darüber hinaus aufnehmen.

Die ersten Videodatenströme, die von den Kameras erzeugt werden, können durch das Computersystem zu einem Panoramavideodatenstrom als zweiten Videodatenstrom verarbeitet werden, der über Netzwerkschnittstellen an einen Empfänger außerhalb des Gehäuses übermittelt werden kann.

Die Bildwinkel jeder der drei Kameras können mindestens 60°, z.B. 60° bis 90°, 61° bis 80°, oder 63° bis 70° sein. Somit ergibt sich eine Überlappung der Sichtfelder der einzelnen Kameras.

In Aufsicht können die optischen Achsen der drei Kameras um 50° bis 80° oder 55° bis 65° zueinander versetzt sein. Dadurch wird eine optimale Ausrichtung der Kameras und eine optimale Überlappung der einzelnen Sichtfelder erreicht.

Das Gehäuse kann ferner ein Mittelteil zum Verschließen des ersten Teilgehäuses und ein zweites Teilgehäuse umfassen.

Die Höhe des Gehäuses kann zwischen 10 cm und 30 cm, zwischen 12 cm und 20 cm oder 13 cm und 17 cm betragen. Die Länge des Gehäuses an der längsten Stelle kann zwischen 10 cm und 40 cm, 15 cm und 23 cm, oder 15 cm bis 21 cm betragen. Die Breite des Gehäuses kann an der breitesten Stelle zwischen 10 cm und 40 cm, 15 cm und 30 cm, oder 17,5 cm bis 22,5 cm betragen.

Daher ist das Gehäuse sehr kompakt gestaltet.

Der Energieverbrauch der Panoramakamera kann weniger als 30, 20 oder 10 Watt betragen.

Dadurch wird die Wärmeerzeugung im Gehäuse reduziert und die Panoramakamera kann auch durch Sonnenkollektoren (z.B. in der Nähe angebrachte Sonnenkollektoren) betrieben werden.

Das erste Teilgehäuse besteht aus einer Oberseite (einer Platte) und einer umlaufenden Seitenwand. Die Seitenwand des ersten Gehäuses ist in eine Vorder- und Rückseite aufgeteilt. Die Vorderseite des Gehäuses kann miteinander verbundene winkelig zueinander angeordnete ebene Vorderseitenflächen umfassen.

Durch die ebenen Vorderseitenflächen wird es möglich, den Abstand der Kameras zu den Fenstern im Gehäuse zu reduzieren, sodass eine kompaktere Bauweise ermöglicht wird, bei der die optischen Zentren der Kameras nah beieinander sind, was nachfolgende Verarbeitungsschritte wie Stitching erleichtert.

Ferner kann die Vorderseite Fenster für die mindestens eine Kamera umfassen.

Die Winkel, die zwischen den Vorderseitenflächen bestehen, können so gewählt sein, dass sie die Bildwinkel der mindestens einen Kamera oder der mindestens zwei oder drei Kameras nicht einschränken. Somit kann jede Kamera optimal genutzt werden.

Die optische Achse der mindestens einen Kamera oder die optischen Achsen der mindestens zwei oder drei Kameras können normalorientiert zu einer gegenüberliegenden Vorderseitenfläche mit Fenster sein. Somit werden optische Artefakte reduziert.

Das Kamerasystem kann mindestens zwei oder drei Kameras umfassen, wobei die Kameras zu der jeweils gegenüberliegenden Vorderseitenfläche mit Fenster den gleichen Abstand aufweisen.

Die Rückseite des Gehäuses kann in Aufsicht betrachtet vorwiegend in einem Bogen verlaufen (z.B. mit Ausnahme der beschriebenen abgeflachten ebenen Fläche). Diese Anordnung ist für die Stabilität und Aerodynamik des Gehäuses vorteilhaft.

Ferner kann der Bogen in der Mitte des Bogens eine abgeflachte ebene Fläche enthalten, die dazu geeignet ist, eine Befestigungsvorrichtung an der abgeflachten Fläche zu montieren.

Das erste Teilgehäuse kann staub- bzw. wasserdicht gestaltet sein. Somit wird verhindert, dass es zu witterungsbedingten Beschädigungen kommt. Ferner kann das erste Teilgehäuse ein Belüftungselement enthalten, das das Eindringen von Feuchtigkeit in das erste Teilgehäuse verhindert. Durch das Belüftungsventil ist ein Druckausgleich zur Umgebung möglich bzw. es ist möglich, Feuchtigkeit unidirektional aus dem ersten Teilgehäuse hinaus zu befördern.

Ferner kann das Gehäuse ein zweites Teilgehäuse umfassen, wobei das zweite Teilgehäuse folgende Merkmalle umfassen kann:
ein Richtmikrophon, das funktional mit dem Computersystem des ersten Teilgehäuses verbunden ist; und
eine Öffnung in die Umgebung, die es ermöglicht, dass das Richtmikrophon akustische Geräusche aus der Umgebung aufnehmen kann.
Durch das Unterbringen des Mikrophons im Gehäuse ist es möglich, dies vor Beschädigung zu schützen. Gleichzeitig ermöglicht die Öffnung, dass Schallwellen aus der Umgebung zu dem Mikrophon gelangen.

Das zweite Teilgehäuse besteht aus einer Unterseite (einer Platte) und einer umlaufenden Seitenwand. Die Seitenwand des ersten Gehäuses ist in eine Vorder- und Rückseite aufgeteilt.

Das Gehäuse kann ferner ein Mittelteil umfassen, das das erste Teilgehäuse verschließt und als Platte gestaltet ist.

Die Panoramakamera soll möglichst autonom sein und daher alle für ihren Betrieb notwendigen Komponenten innerhalb des Gehäuses enthalten. Ferner sollen alle diese Komponenten im ersten wasser- und staubdichten ersten Teilbereich gewissermaßen verkapselt und geschützt vorliegen.

Daher kann das Computersystem folgende Komponenten umfassen:
a. ein Netzteil;
b. ein Gebläse;
c. eine Prozessoreinheit, die konfiguriert ist, mindestens 15 Teraoperationen pro Sekunde, TOPS, auszuführen;
d. eine Festplatte;
e. einen Coprozessor zur Unterstützung der Prozessoreinheit bei der Ausführung von Maschinenlernen Modellen;
f. eine drahtlose Übertragungsschnittstelle, z.B. Mobilfunkmodem;
g. eine drahtgebundene Netzwerkschnittstelle;
h. eine Audioschnittstelle, die zur Phantomspeisung eines Richtmikrophons geeignet ist; und/oder
i. eine an das erste Teilgehäuse räumlich angepasste Leiterplatte mit einer Konfiguration und Anschlüssen, die für das Betreiben der Komponenten gemäß a. bis h. erforderlich sind.

Das eingebaute Netzteil hat den Vorteil, dass extern kein weiteres Netzteil zur Verfügung gestellt werden muss, das ebenfalls witterungsanfällig wäre.

Das Gebläse hat den Vorteil, dass innen im ersten Teilgehäuse entstehende Wärme optimal verteilt wird, und so leichter über die Wand des ersten Teilgehäuses abgegeben werden kann. Die im ersten Teilgehäuse auftretende Wärme kann auch dazu verwendet werden, Feuchtigkeit leichter aus dem ersten Teilgehäuse abzuführen, z.B. über das Belüftungselement.
Die Prozessoreinheit ist ausreichend rechenstark, um die komplexe Verarbeitung des aufgenommenen Videodatenstroms bzw. der aufgenommenen Videodatenströme zu gewährleisten. Zur Unterstützung der Prozessoreinheit kann der Coprozessor dienen.

Der Coprozessor kann als Grafikeinheit gestaltet sein (Graphic Processing Unit, GPU), um bestimmte Verarbeitungsschritte der Datenströme zu beschleunigen. Derartige Grafikeinheiten sind beispielsweise als Grafikkarten in üblichen Computern oder auch als spezialisierte Grafikeinheiten insbesondere zur Ausführung von Maschinenlernen Algorithmen verbreitet. Die Grafikeinheiten sind zur Durchführung der bestimmten Verarbeitungsschritte optimiert, sodass eine schnelle und kostengünstige Bildverarbeitung ermöglicht wird. Die Grafikeinheiten umfassen typischerweise einen oder mehrere Grafikprozessoren und Grafikspeicher.

Über die drahtlose Übertragungsschnittstelle, z.B. das Mobilfunkmodem, können die erzeugten Datensignale drahtlos in die Umgebung abgegeben werden. Es können an sich beliebige drahtlose Übertragungsstandards für die Panormakamera verwendet werden, beispielsweis UMTS, LTE, 5G, W-LAN oder andere. Die Übertragungsstandards müssen lediglich eine ausreichende Bandbreite zur Übertragung eines Videoaudiodatenstreams oder Videodatenstrams, inbesondere von Bildern, d.h. der Videobilder bzw. des Videostreams, mit einer gewünschten Qualität, die sich beispielsweise über eine Bitrate und mögliche Verzögerungen bei der Datenübertragung definieren lässt, bereitstellen. Außerdem kann ein Anschluss des Kamerasystems erleichtert werden, wenn die externe Übertragungsschnittstelle als drahtlose Übertragungsschnittstelle implementiert ist. In dem Fall ist lediglich eine drahtlose Verbindung des Kamerasystems mit einer weiteren Übertragungsstrecke herzustellen, beispielsweise über eine Internetverbindung. Ein Antennenanschluss, wie alle Anschlüsse, kann durch einen Mittelteil in das zweite Teilgehäuse durchgeführt werden. Hier oder außen an dem Gehäuse kann eine Antenne, die mit der drahtlosen Übertragungsschnittstelle, z.B. dem Mobilfunkmodem, verbunden ist, vorgesehen sein.

Eine drahtgebundene Netzwerkschnittstelle ermöglicht die Anbindung der Panoramakamera auch an Orten, an denen eine drahtlose Verbindung nicht möglich ist.

Die Audioschnittstelle ermöglicht es, bereits innerhalb des Gehäuses das vom Richtmikrophon stammende Signal zu verarbeiten und mit dem Videosignal für eine Übertragung zu multiplexen bzw. das Signal einer Analyse durch die Maschinenlern-Modelle zuzuführen.

Ferner kann auch eine Schnittstelle für mindestens ein Mikrophon, das sich nicht im Gehäuse befindet, vorgesehen sein. Dies ermöglicht, dass der Audiokommentar einer Person am Ort der Sportveranstaltung (z.B. der Stadionsprecher) in einen hergestellten Audiodatenstrom des Audiovideodatenstroms integriert werden kann.

Schließlich sind alle die oben genannten Komponenten an eine an die Grundfläche des ersten Teilgehäuses räumlich angepasste Leiterplatte angeschlossen, die für den Datentransfer zur Prozessoreinheit und anderer Komponenten vorgesehen ist. Die Leiterplatte kann dabei in der Form ihres Umfangs der Wandung des ersten Teilgehäuses folgen.

Das erste Teilgehäuse kann aus Metall gefertigt sein, z.B. aus Aluminium oder einem anderen gut wärmeleitenden, witterungsbeständigen und zugleich bei Raumtemperatur stabilen Metall, oder einer Metalllegierung.

Dadurch wird eine optimale Wärmeabführung des Gehäuses erreicht.

Das erste Gehäuse kann Kühlrippen auf der Außenseite, insbesondere der Rückseite, aufweisen, um eine noch effizientere Wärmeabführung zu ermöglichen.

Die Panoramakamera kann ferner eine elektrisch betreibbare Abdeckung für die mindestens eine Kamera umfassen, wobei die Abdeckung innerhalb des ersten Teilgehäuses oder außerhalb des Gehäuses angebracht ist.

Die Abdeckung dient im geschlossenen Zustand dazu, um zum einen die Optik der Kameras vor Beschädigungen z.B. durch Laser zu schützen, und zum anderen, um gegenüber Personen klar anzuzeigen, dass die Panoramakamera keine Aufnahmen vornehmen kann.

Dies ist insbesondere vorteilhaft, wenn die Panoramakamera an Orten aufgestellt wird, die auch von Personen genutzt werden, die ein Anrecht darauf haben, nicht aufgenommen werden zu wollen. Diese Abdeckung kann als Klappe, Jalousie, Zentralverschluss (Lamellenverschluss), etc. ausgeführt sein und die dafür verantwortlichen Aktuatoren können elektrisch ansteuerbar sein. Die Aktuatoren für die Abdeckung können durch die Prozessoreinheit gesteuert werden und/oder über eine separate Fernbedienung.

Ferner kann die Panoramakamera auf der Außenseite mit Leuchtdioden ausgestattet sein, die mit dem Computersystem verbunden sind und durch das Computersystem angesteuert werden können. Durch die Leuchtdioden können Zustände der Panoramakamera angezeigt werden, z.B. ob die Kamera angeschaltet ist, aufnimmt, eine Störung hat etc.

Die einzigen Anschlüsse, die aus dem Gehäuse in die Umgebung führen, können Anschlüsse für die Stromversorgung und für einen Netzwerkanschluss sein. Somit wird die Versorgung der Panoramakamera sowie deren Montage vereinfacht. Ferner können auch Anschlüsse für die Antenne der drahtlosen Übertragungsschnittstelle und Anschlüsse für ein außerhalb des Gehäuses vorgesehenes Mikrophon aus dem Gehäuse in die Umgebung führen.

Die Erfindung betrifft auch eine Panoramakameraanlage umfassend eine Panoramakamera gemäß der vorstehenden Beschreibung und eine Befestigungsvorrichtung, die es ermöglicht, die Panoramakamera an einem Mast, Dachkonstruktion oder Stativ anzubringen, wobei die Befestigungsvorrichtung es ermöglicht, die Panoramakamera gegenüber dem Mast, der Dachkonstruktion oder dem Stativ horizontal und vertikal zu verstellen oder zu drehen. Die Verstellung kann rein mechanisch bewirkt werden oder durch ferngesteuerte elektrisch betriebene Aktuatoren.

Die Panoramakameraanlage kann ferner den Mast, die Dachkonstruktion oder das Stativ umfassen.

Der Mast oder die Dachkonstruktion können Hohlleitungen oder -räume aufweisen, und die Anschlüsse, die aus dem Gehäuse in die Umgebung führen, können innerhalb der Hohlleitungen (-räume) verlegt sein. Somit ist es möglich, auch die außerhalb des Gehäuses liegenden Leitungen besser vor Beschädigung zu schützen.

Die Panoramakameraanlage kann weitere außerhalb des Gehäuses positionierte Kameras umfassen, wobei das Computersystem der Panoramakamera eingerichtet ist, mindestens die Ausrichtung der weiteren Kameras zu steuern. Bei den weiteren Kameras kann es sich um über elektrische Aktuatoren steuerbare Kameras handeln. Somit wird es z.B. möglich, einen interessierenden Bereich, der durch das Computersystem bestimmt wurde, aus verschiedenen Blickwinkeln mittels mehrerer Kameras zu bestimmen. Das Computersystem kann dabei nicht nur die Ausrichtung der Kameras, also ihre optischen Achsen, steuern, sondern auch Focus, Zoom, Helligkeit und andere übliche Parameter zur Steuerung einer digitalen Kamera. Somit wird es möglich, ohne menschliche Kameraleute eine Sportveranstaltung aus verschiedenen Blickwinkeln zu erfassen.

### Kurze Beschreibung der Figuren

Figuren 1 und 2 zeigen Außenansichten der Panoramakamera.
Figur 3 zeigt eine Außenansicht der Kamera, bei der Fenster außen auf der Oberfläche der Panoramakamera angebracht sind.
Figur 4 zeigt schematisch in Aufsicht das erste Teilgehäuse der Panoramakamera.
Figur 5 zeigt schematisch in Aufsicht das Mittelteil der Panoramakamera.
Figur 6 zeigt schematisch in Aufsicht das zweite Teilgehäuse der Panoramakamera.
Figur 7 zeigt schematisch die Panoramakamera in Frontansicht.
Figur 8 zeigt schematisch das Kamerasystem in Frontansicht.
Figur 9 zeigt schematisch das Kamerasystem in Aufsicht.
Figur 10 zeigt einen beispielhaften Vorgang, durch den das Computersystem die Einzelbilder der Kameras zu einem Panoramabild verarbeitet und aus diesem Panoramabild einen Teilbereich isoliert.

### Beispiel

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die im Zusammenhang mit einer Ausführungsform beschrieben wurden, auch separat in anderen Ausführungsformen verwendbar.

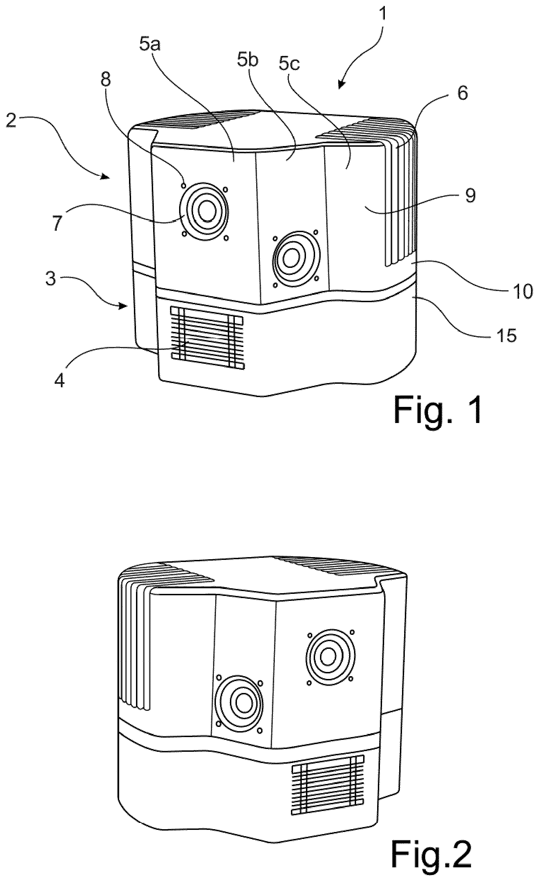

Figur 1 zeigt das Gehäuse 1 der Panoramakamera von rechts oben und Figur 2 zeigt die Panoramakamera von links oben betrachtet. Die Panoramakamera umfasst ein erstes Teilgehäuse 2 (hier oben), einen Mittelteil 15, der das erste Teilgehäuse 2 abschließt, und ein zweites Teilgehäuse 3 (hier unten). Erstes Teilgehäuse 2, Mittelteil 15 und ein zweites Teilgehäuse 3 sind vorzugsweise jeweils einstückig ausgeführt.

Das erste Teilgehäuse umfasst auf der Vorderseite 9 Fenster 7 für die Kameras 12 (nicht referenziert). In vorliegender Figur 1 sind die Fenster in die Vorderseite 9 des ersten Teilgehäuses 2 integriert, es können aber auch Bohrungen 8 vorhanden sein, die zu einer Montage der Fenster 7 auf der äußeren Oberfläche der Vorderseite 9 benutzt werden können. Ferner weist die Panoramakamera Kühlrippen 6 auf, die vorzugsweise in dem ersten Teilgehäuse 2 angebracht sind. Vorzugsweise befinden sich die Kühlrippen auf der Rückseite 10 der Panoramakamera.

Auf der Vorderseite 9 des zweiten Teilgehäuses 2 befindet sich eine durchgehende Öffnung 4, die wie in Figuren 1 und 2 mit einem Gitter bedeckt sein kann. Alternativ zum Gitter kann jede Form der Abdeckung an der Öffnung 4 angebracht sein, die Schall effizient in das zweite Teilgehäuse 3 einlässt. Die Vorderseite des ersten bzw. zweiten Teilgehäuses 2, 3 ist vorzugsweise in ebene Vorderseitenflächen 5a-5e aufgeteilt, die sich von der Oberseite des Gehäuses 1 zu dessen Unterseite erstrecken und winkelig zueinander angeordnet sind. In Figuren 1 und 2 sind fünf Vorderseitenflächen illustriert (aus Gründen der Übersicht werden jeweils aber nur drei Vorderseitenflächen referenziert). Die Winkel, die die Vorderseitenflächen 5a-e zueinander einschließen, sind so gewählt, dass die Bildwinkel der Kameras 12 im Gehäuse 1 nicht durch die Vorderseitenflächen 5a-e eingeschränkt werden.

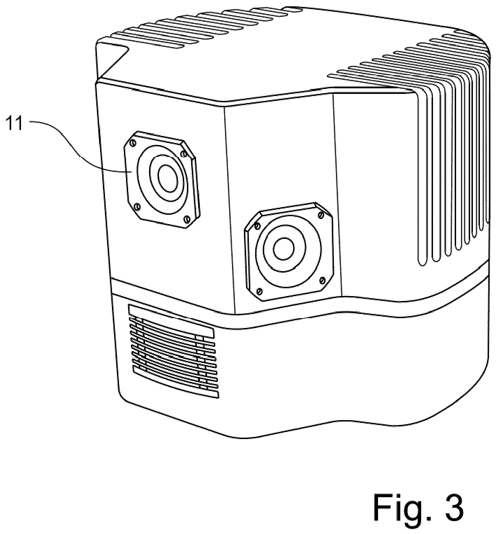

In Figur 3 wird das Gehäuse 1 in einer Ausführungsform gezeigt, bei der die Fenster 7 auf der äußeren Oberfläche der Vorderseite 9 angebracht sind.

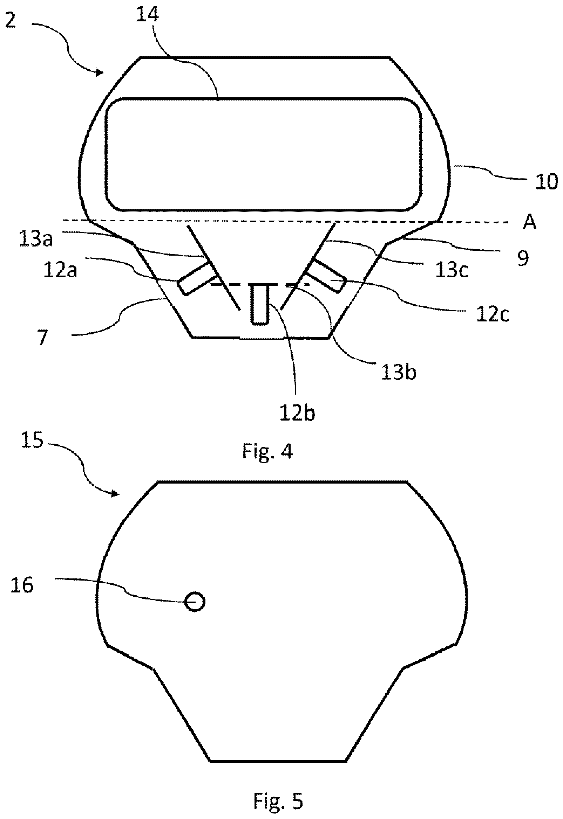

Figur 4 zeigt schematisch in Aufsicht das erste Teilgehäuse 2 nach Entfernung des Mittelteils 15, also in einem Blickwinkel von unten nach oben. Die Linie A markiert die Abgrenzung zwischen Vorderseite 9 und Rückseite 10. Das erste Teilgehäuse 2 enthält eine Leiterplatte 14, auf der die Prozessoreinheit, Coprozessor, Schnittstellen und andere Komponenten zur Prozessierung der Datenströme untergebracht sind (nicht gezeigt). Die Leiterplatte 14 ist in der Darstellung am Boden des ersten Teilgehäuses angebracht, d.h. ist an der Oberseite des ersten Teilgehäuses angebracht. Die Prozessoreinheit ist funktional mit dem Kamerasystem verbunden, das im vorliegenden Falle aus drei Kameras 12a-c besteht, die auf Kameraträgern 13a-c angebracht sind. Die Kameras sind so zueinander positioniert, dass sie in ihrer Gesamtheit einen Blickwinkel von mindestens 180° in der Horizontalen abdecken. Dabei befinden sich die optischen Achsen der äußeren Kameras 12a und 12c auf einer Ebene, während die optische Achse der mittleren Kamera 12b sich auf einer Ebene befindet, die zur Ebene, auf der sich die äußeren Kameras 12a und 12c befinden, beabstandet ist. Vorzugsweise sind beide Ebenen parallel zueinander. Dies hat zur Folge, dass die Kameras 12a-c im ersten Teilgehäuse 2 auf zwei unterschiedlichen Ebenen angeordnet sind. Dies hat den Vorteil, dass eine besonders kompakte Anordnung des Kamerasystems möglich ist, da die Kameras somit sehr nah an dem gedachten Kreuzungspunkt ihrer optischen Achsen auf einer Normalen zu den Ebenen, auf denen sich die optischen Achsen der Kameras befinden, herangerückt werden können. Somit werden Störungen beim Stitching vermieden.

Die Kameras 12a-c mit ihren Trägern 13a-c können auf einer vorzugsweise einstückigen Stativvorrichtung angebracht sein, die die korrekte Ausrichtung im Raum und Fixierung der Kameras gewährleistet (nicht gezeigt). Die Stativvorrichtung kann über einen weiteren Träger mit dem ersten Teilgehäuse 2 verbunden sein oder ist mit diesem direkt verbunden. Vorzugsweise handelt es sich bei dem weiteren Träger um eine Platte (z.B. aus Kunststoff), die in einem Abstand im Wesentlichen parallel zur Leiterplatte 14 angebracht ist, und die Fläche der Leiterplatte 12 zu mindestens 60% überdeckt (aber nach Bedarf Schnittstellen zugänglich lässt), und über Fixierungen, wie Schrauben, im Bereich der Ränder der Platte mit der Oberseite des ersten Teilgehäuses 2 verbunden ist. Somit wird ein Schutz der Leiterplatte 14 bei gleichseitiger fester Montage der Kameras über die Stativvorrichtung an das Gehäuse 1 gewährleistet.

Figur 5 zeigt schematisch in Aufsicht das Mittelteil 15 des Gehäuses 1, das auf das erste Teilgehäuse 2 aufgesetzt werden kann. Die Einheit aus Teilgehäuse 2 und Mittelteil 15 ist staub- und wasserdicht (z.B. gemäß mindestens dem IP67 Standard gemäß ISO 20653 oder DIN EN 60529). Dies gilt auch für alle Leitungen, die aus dem ersten Teilgehäuse 2 durch das Mittelteil 15 geführt werden (nicht dargestellt). Ferner kann das Mittelteil ein Entlüftungselement (oder Belüftungsventil) 16 umfassen (z.B. Gore Vent), welches es ermöglicht, das Innere des ersten Teilgehäuses 2 zu entlüften bzw. Feuchtigkeit aus dem ersten Teilgehäuse 2 abzuleiten und zugleich zu verhindern, dass Staub oder Feuchtigkeit in das erste Teilgehäuse eindringt. Zwischen dem Mittelteil 15 und dem Teilgehäuse 2 kann auch eine Dichtung angebracht sein, z.B. eine umlaufende Dichtung aus einem flexiblen Material, das auf dem Rand der Wandung des Teilgehäuses 2 aufliegt (nicht gezeigt). Ferner können die Fenster 7 durch umlaufende Dichtungen aus Kunststoff zwischen den jeweiligen Fenstern 7 und dem ersten Teilgehäuse 2 abgedichtet sein.

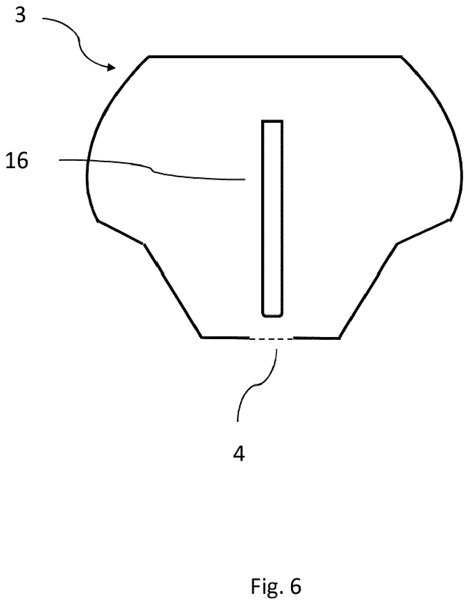

Figur 6 zeigt das zweite Teilgehäuse 3 in Aufsicht, also in einem Blickwinkel von oben nach unten. Im zweiten Teilgehäuse 3 ist ein Richtmikrophon 16 vorgesehen, dessen Mikrophonmembran in Richtung einer Öffnung 4 ausgerichtet ist. Das Richtmikrophon 16 kann am Mittelteil 15 befestigt sein oder am zweiten Teilgehäuse 3. Das zweite Teilgehäuse 3 braucht nicht wasserdicht ausgelegt zu sein. Alternativ ist es aber möglich, das Richtmikrophon in die Öffnung 4 so einzulassen, dass es das zweite Teilgehäuse 3 wasserdicht abschließt. In diesem Fall sind Dichtungen wie zwischen Mittelteil 15 und dem ersten Teilgehäuse 2 vorzusehen, sowie auch ein Entlüftungselement 16 im zweiten Teilgehäuse 3, das eine Entlüftung in die Umgebung ermöglicht.

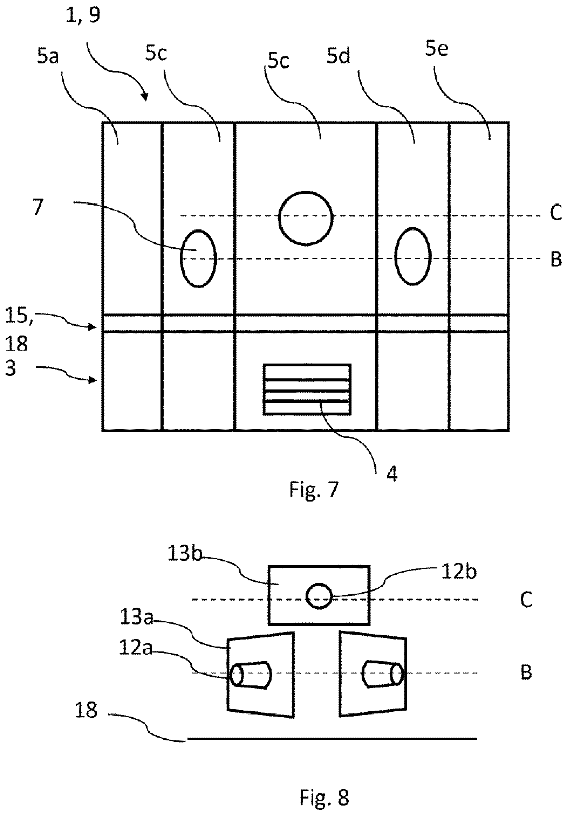

Figur 7 zeigt das Gehäuse 1 in Frontansicht. Wie schon zuvor erläutert, umfasst die Panoramakamera ein erstes Teilgehäuse 2 (hier oben), einen Mittelteil 15, der das erste Teilgehäuse 2 abschließt, und ein zweites Teilgehäuse 3 (hier unten).

Das erste Teilgehäuse umfasst auf der Vorderseite 9 Fenster 7 für die Kameras 12 (nur eines referenziert). Auf der Vorderseite 9 des zweiten Teilgehäuses befindet sich die durchgehende Öffnung 4, die wie durch die Querlinien angedeutet mit einem Gitter bedeckt sein kann. Die Vorderseite des ersten bzw. zweiten Teilgehäuses 2, 3 ist vorzugsweise in ebene Vorderseitenflächen 5a-5c aufgeteilt, die sich von der Oberseite des Gehäuses 1 zu dessen Unterseite erstrecken und winkelig zueinander angeordnet sind. In Figur 5 sind fünf Vorderseitenflächen illustriert.

Linien B und C markieren die Ebenen, die sich orthogonal in die Zeichnungsebene erstrecken, auf denen zum einen die zwei äußeren Kameras 12a und 12c (Linie B) und zum anderen die mittlere Kamera 12 b (Linie A) liegen.

Die Winkel, die die Vorderseitenflächen 5a-e einschließen, sind so gewählt, dass die Bildwinkel der Kameras 12 im Gehäuse 1 nicht durch die Vorderseitenflächen eingeschränkt werden.

Entsprechend zeigt Figur 8 in schematischer Perspektive die Anordnung des isolierten Kamerasystems in Frontansicht. Die zwei äußeren Kameras 12 a und 12 c (letztere der Übersichtlichkeit halber nicht referenziert) befinden sich in ihrer Ausrichtung (ihren optischen Achsen) auf einer Ebene B, die zur Oberfläche des Mittelteils 18 beabstandet ist. Der Abstand der Ebene C, auf der sich die mittlere Kamera 12b befindet, weist einen größeren Abstand zur Oberfläche des Mittelteils 18 auf und ist vorzugsweise parallel eben zur Ebene B und Oberfläche des Mittelteils 18. Als Bezugspunkt kann statt der Oberfläche des Mittelteils 18 auch jede andere gedachte Ebene gewählt werden, die sich in einem Abstand zur Ebene B und C befindet. Ferner ist es auch möglich, die vertikale Anordnung der Kameras zueinander umzudrehen, also derart, dass sich die mittlere Kamera 12b unterhalb der Kameras 12 a und 12 c befindet.

Wie aus der Figur 8 zu erkennen, ist die optische Achse der mittleren Kamera 12 b orthogonal zur Zeichnungsebene. Demgegenüber weisen die optischen Achsen der äußeren Kameras 12 a und 12 c gegenüber dieser optischen Achse der mittleren Kamera 12 b jeweils in negativer und positiver Weise einen Winkelversatz auf.

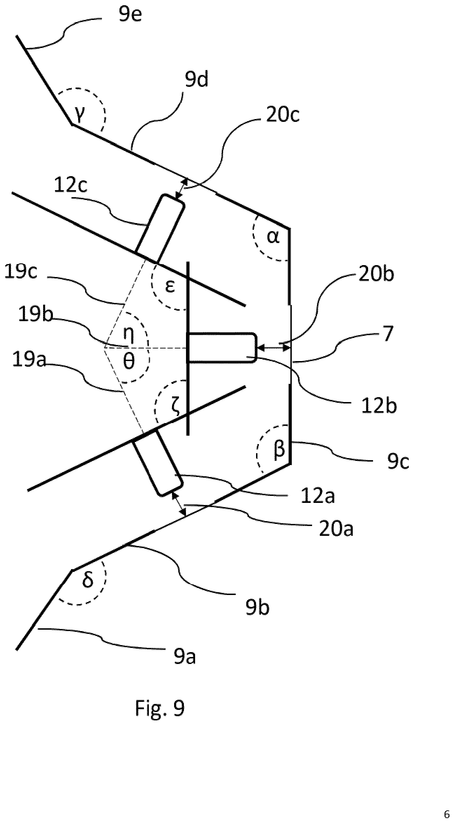

Figur 9 zeigt die Anordnung aus Figur 8 in Aufsicht ohne Betrachtung der oben diskutierten unterschiedlichen horizontalen Ebenen.

Die optischen Achsen der Kameras 12a, 12b, 12c können eine Orthogonale zur Zeichnungsebene schneiden.

Der Winkel θ zwischen der optischen Achse 19a der Kamera 12a und der optischen Achse 19b der Kamera 12 b und der Winkel η zwischen der optischen Achse 19b der Kamera 12b und der optischen Achse 19c der Kamera 12 c ist gleich oder ungefähr gleich (±20°, 10°, 5°, oder 2°). Die Winkel θ und/oder η sind ungefähr 50° bis 80°, 55° bis 65°, 57° bis 62°, oder 60°.

Die Bildwinkel (nicht dargestellt) jeder Kamera sind mindestens 60°, z.B. 60° bis 90°, 61° bis 80°, oder 63° bis 70°. Somit ergibt sich eine Überlappung der Sichtfelder der einzelnen Kameras.

Die Winkel α, β, γ, und δ sind so gestaltet, dass die Bildwinkel bzw. die Sichtfelder der Kameras durch die Vorderseitenflächen 9a, 9b, 9c, 9d oder 9e möglichst nicht oder nicht eingeschränkt werden.

Daher betragen die Winkel γ und δ ungefähr zwischen 120° und 150°, 130° und 140° oder 135°. Daher betragen die Winkel α und β ungefähr zwischen 115° und 130°, 120° und 130° oder 125°.

Die Fenster 7 sind ungefähr gleich dick und in Bezug zur Ebene der jeweiligen Vorderseitenflächen, in die sie integriert sind, gleich positioniert.

Die Abstände 20a, b, c der Kameras 12a,b,c zu den jeweiligen Fenstern sind ungefähr gleich oder gleich. Die Abstände der Oberflächen der Objektive der Kameras 12a,b,c zu den Fenstern 7 können 5 bis 15 mm betragen.

Durch die oben beschriebene Positionierung der Kameras 12a,b,c zueinander und innerhalb des ersten Teilgehäuses 2 wird eine optimale Erfassung des Sichtfelds des Kamerasystems über mindestens 180° gewährleistet, bei gleichzeitiger Überlappung der Sichtfelder der einzelnen Kameras. Somit wird es möglich, die durch die Kameras 12a,b,c aufgenommenen Bilder mittels des Computersystems zusammenzufügen (zu "stitchen"). Ferner wird erreicht, dass die optischen Zentren der Kameras möglichst nahe beieinanderliegen, was das Stitchen verbessert.

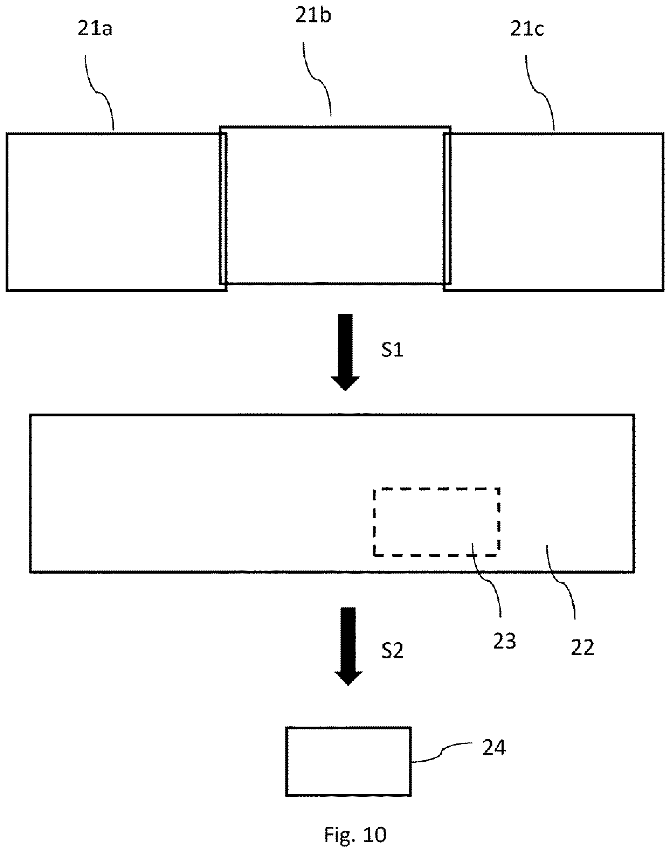

Figur 10 zeigt schematisch und beispielhaft die Vorgänge, die durch das Computersystem durchgeführt werden. Im oberen Teil der Figur 10 ist gezeigt, dass das Bild der mittleren (oberen) Kamera 12b marginal gegenüber den Bildern der äußeren unteren Kameras 12a, c vertikal versetzt ist. Die durch die Kameras 12a,b,c aufgenommenen Bilder (hier als Einzelbilder 21a,b,c eines Videodatenstroms gezeigt) werden durch das Computersystem zu einem Panoromabild vereinigt (S1). Der im Computersystem implementierte Prozess, der auf Maschinenlernen-Modellen beruht, ist in der Lage, einen interessierenden Bereich 23 zu identifizieren. Dies kann zum Beispiel ein Bereich sein, in dem das aktuelle Zentrum des Spielgeschehens stattfindet (z.B. die Position des Balles oder einer Ballung von Spielern oder beides). Das Computersystem kann diesen interessierenden Bereich 23 in Echtzeit verfolgen, sodass sich dessen Position laufend ändern kann. Das Computersystem extrahiert dann den Bildabschnitt, in dem sich der interessierende Bereich 23 befindet, als neues Bild 24, das nur einen Teilbereich des Panoramabildes darstellt (S2). Dieses Bild 24 kann dann durch das Computersystem an einen Empfänger außerhalb der Panoramakamera übermittelt werden. Da dieser Vorgang fortlaufend geschieht, ist die Ausgabe eines Panoramavideodatenstroms bzw. eines Videodatenstroms, der nur den interessierenden Bereich erfasst, möglich.

### Referenzzeichen

- 1: Gehäuse
- 2: Erstes Teilgehäuse
- 3: Zweites Teilgehäuse
- 4: Öffnung im zweiten Teilgehäuse
- 5a-e: Vorderseitenflächen
- 6: Kühlrippen
- 7: Fenster
- 8: Bohrung
- 9: Vorderseite
- 10: Rückseite
- 11: Vorgesetzte Fenster
- 12a-c: Kameras
- 13a-c: Kameraträger
- 14: Leiterplatte
- 15: Mittelteil
- 16: Belüftungselement
- 17: Mikrophon/Richtmikrophon
- 18: Oberfläche des Mittelteils
- 19a-c: optische Achsen der Kameras
- 20abc: Abstand der Kameras (oder Kameraobjektive) zu den Fenstern
- 21a-c: Sichtfelder der Kameras bzw. Bild des ersten Videodatenstroms
- 22: Panoramabild
- 23: Interessierender Bereich im Panoramabild
- 24: zweiter Videodatenstrom

## Patentansprüche

1. Panoramakamera zum Erfassen von Sportveranstaltungen umfassend ein Gehäuse, wobei das Gehäuse ein erstes Teilgehäuse umfasst, das erste Teilgehäuse umfassend:
a. ein Kamerasystem mit einem Bildwinkel von mindestens 180° zur Erfassung eines Sichtfeldes, das Kamerasystem umfassend mindestens eine Kamera, wobei die mindestens eine Kamera eingerichtet ist, einen ersten Videodatenstrom basierend auf dem Sichtfeld des Kamerasystems zu erfassen,
b. ein Computersystem eingerichtet
zum automatischen Bestimmen eines Teilbereichs des Videodatenstroms, in dem eine interessierende Handlung der Sportveranstaltung vorgenommen wird, und Erstellen eines zweiten Videodatenstroms, bei dem jeder Frame des zweiten Videodatenstroms nur den Teilbereich des ersten Panoramavideodatenstroms enthält.

2. Panoramakamera gemäß Anspruch 1, wobei das Kamerasystem mindestens zwei Kameras umfasst, und die mindestens zwei Kameras eingerichtet sind, horizontal nebeneinanderliegende erste und zweite Teilbereiche des Sichtfeldes zu erfassen.

3. Panoramakamera gemäß Anspruch 2, wobei der Bildwinkel jeder der Kameras zwischen 80° und 150°, 85° und 135°, oder 90° und 120° ist.

4. Panoramakamera gemäß Anspruch 2, wobei das Kamerasystem mindestens eine dritte Kamera umfasst, und die dritte Kamera eingerichtet ist, einen dritten Teilbereich des Sichtfeldes zu erfassen, der gegenüber den horizontal nebeneinanderliegenden Teilbereichen des Sichtfeldes vertikal versetzt ist und auf einer horizontalen Achse, die den ersten und zweiten Teilbereich verbindet, zwischen dem ersten und zweiten Teilbereich angeordnet ist.

5. Panoramakamera gemäß Anspruch 4, wobei in Aufsicht die optischen Achsen der drei Kameras um 50° bis 80° oder 55° bis 65° zueinander versetzt sind.

6. Panoramakamera gemäß einem der vorstehenden Ansprüche, wobei die Vorderseite des Gehäuses miteinander verbundene winkelig zueinander angeordnete ebene Vorderseitenflächen umfasst, und die Vorderseite Fenster für die mindestens eine Kamera umfasst.

7. Panoramakamera gemäß Anspruch 6, wobei die Winkel, die zwischen den Vorderseitenflächen bestehen, so gewählt sind, dass sie die Bildwinkel der mindestens einen Kamera oder der mindestens zwei oder drei Kameras nicht einschränken.

8. Panoramakamera gemäß Ansprüchen 6 oder 7, wobei die optische Achse der mindestens einen Kamera oder die optischen Achsen der mindestens zwei oder drei Kameras normalorientiert zu einer gegenüberliegenden Vorderseitenfläche mit Fenster sind.

9. Panoramakamera gemäß einem der Ansprüche 6 bis 8, wobei das Kamerasystem mindestens zwei oder drei Kameras umfasst, und die Kameras zu der jeweils gegenüberliegenden Vorderseitenfläche mit Fenster den gleichen Abstand aufweisen.

10. Panoramakamera gemäß einem der vorstehenden Ansprüche, wobei das erste Teilgehäuse wasserdicht gestaltet ist und ein Belüftungselement enthält, das das Eindringen von Feuchtigkeit in das erste Teilgehäuse verhindert.

11. Panoramakamera gemäß einem der vorstehenden Ansprüche, wobei das Gehäuse ein zweites Teilgehäuse umfasst, das zweite Teilgehäuse umfassend:
a. ein Richtmikrophon, das funktional mit dem Computersystem des ersten Teilgehäuses verbunden ist; und
b. eine Öffnung in die Umgebung, die es ermöglicht, dass das Richtmikrophon akustische Geräusche aus der Umgebung aufnehmen kann.

12. Panoramakamera gemäß einem der vorstehenden Ansprüche, wobei das Computersystem umfasst:
a. ein Netzteil;
b. ein Gebläse;
c. eine Prozessoreinheit, die konfiguriert ist, mindestens 15 Teraoperationen pro Sekunde, TOPS, auszuführen;
d. eine Festplatte;
e. einen Coprozessor zur Unterstützung der Prozessoreinheit bei der Ausführung von Maschinenlernen Modellen;
f. eine drahtlose Übertragungsschnittstelle;
g. eine drahtgebundene Netzwerkschnittstelle;
h. eine Audioschnittstelle, die zur Phantomspeisung eines Richtmikrophons geeignet ist; und/oder
i. eine an das erste Teilgehäuse räumlich angepasste Leiterplatte mit einer Konfiguration und Anschlüssen, die für das Betreiben der Komponenten gemäß a. bis h. erforderlich sind.

13. Panoramakamera gemäß einem der vorstehenden Ansprüche, wobei das erste Teilgehäuse aus Metall gefertigt ist und/oder Kühlrippen auf der Außenseite aufweist.

14. Panoramakamera gemäß einem der vorstehenden Ansprüche, ferner umfassend eine elektrisch betreibbare Abdeckung für die mindestens eine Kamera, wobei die Abdeckung innerhalb des ersten Teilgehäuses oder außerhalb des Gehäuses angebracht ist.

15. Panoramakamera gemäß einem der vorstehenden Ansprüche, wobei die einzigen Anschlüsse, die aus dem Gehäuse in die Umgebung führen, Anschlüsse für die Stromversorgung und für einen Netzwerkanschluss sind.

16. Panoramakameraanlage umfassend eine Panoramakamera gemäß einem der vorstehenden Ansprüche und einen Mast, Dachkonstruktion oder Stativ, an dem die Panoramakamera über eine Befestigungsvorrichtung horizontal und vertikal verstellbar und drehbar angebracht ist.

17. Panoramakameraanlage gemäß Anspruch 16, wobei der Mast oder die Dachkonstruktion Hohlleitungen aufweisen, und die Anschlüsse, die aus dem Gehäuse in die Umgebung führen, innerhalb der Hohlleitungen verlegt sind.

18. Panoramakameraanlage umfassend eine Panoramakamera gemäß der Ansprüche 1 bis 15, ferner umfassend weitere außerhalb des Gehäuses positionierte Kameras, wobei das Computersystem der Panoramakamera eingerichtet ist, mindestens die Ausrichtung der weiteren Kameras zu steuern.
